(19) Europäisches Patentamt / European Patent Office / Office européen des brevets

(11) **EP 2 267 645 B1**

(12) **FASCICULE DE BREVET EUROPEEN**

(45) Date de publication et mention
de la délivrance du brevet:
**20.04.2016  Bulletin 2016/16**

(51) Int Cl.:
***G06K 19/07*** *(2006.01)*   ***G06K 19/073*** *(2006.01)*

(21) Numéro de dépôt: **10160763.8**

(22) Date de dépôt: **22.04.2010**

(54) **Authentification d'un couple terminal-transpondeur électromagnétique par le transpondeur**

Authentifizierung eines elektromagnetischen Transponder-Endelements durch einen Transponder

Authentication of a terminal-electromagnetic transponder couple by the transponder

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **25.06.2009  FR 0954347**

(43) Date de publication de la demande:
**29.12.2010  Bulletin 2010/52**

(73) Titulaire: **STMicroelectronics (Rousset) SAS
13790 Rousset (FR)**

(72) Inventeur: **Wuidart, Luc
83910 Pourrieres (FR)**

(74) Mandataire: **de Beaumont, Michel
Cabinet Beaumont
1, rue Champollion
38000 Grenoble (FR)**

(56) Documents cités:
**EP-A- 1 304 661**

EP 2 267 645 B1

# EP 2 267 645 B1

**Description**

<u>Domaine de l'invention</u>

La présente invention concerne de façon générale les systèmes électroniques et plus particulièrement, les systèmes utilisant des transpondeurs électromagnétiques, c'est-à-dire des émetteurs-récepteurs susceptibles d'être interrogés sans contact et sans fil par un terminal de lecture et/ou d'écriture.

<u>Exposé de l'art antérieur</u>

Les systèmes de communication basés sur une modulation d'un champ électromagnétique généré par un terminal sont multiples. Cela va de la simple étiquette électronique servant d'antivol à des systèmes plus complexes où un transpondeur, devant communiquer avec le terminal dans le champ duquel il se trouve, est équipé de fonctions de calcul (porte-monnaie électronique par exemple) ou de traitement d'information.

Les systèmes à transpondeurs électromagnétiques sont basés sur l'emploi de circuits oscillants comprenant un enroulement formant antenne, côté transpondeur et côté terminal. Ces circuits sont destinés à être couplés par champ magnétique proche lorsque le transpondeur entre dans le champ du terminal. Les circuits oscillants du terminal et du transpondeur sont généralement accordés sur une même fréquence correspondant à la fréquence d'excitation du circuit oscillant du terminal.

Dans la plupart des cas, les transpondeurs sont dépourvus d'alimentation autonome et extraient l'alimentation nécessaire aux circuits qu'ils comportent du champ haute fréquence rayonné par l'antenne du terminal.

Lorsqu'un transpondeur doit communiquer avec un terminal, le transpondeur peut avoir à authentifier le terminal avant d'accepter un échange de données. Par exemple, dans des applications où le transpondeur sert de moyen de paiement (que ce soit monétaire ou par unité de compte), il peut réserver des paiements à certains terminaux. Selon un autre exemple, un transpondeur de type carte à puce, associé à équipement électronique (par exemple, un assistant personnel ou un téléphone mobile) identifie ou authentifie un utilisateur lors d'une communication avec un autre équipement électronique (par exemple, un ordinateur portable ou de bureau).

De façon symétrique, le terminal peut devoir authentifier le transpondeur avant de lui transmettre certaines informations.

Aujourd'hui, les processus d'authentification font appel à des algorithmes de cryptographie et à un échange de données entre le terminal et le transpondeur. Ces processus requièrent des calculs importants qui sont gourmands en énergie et en temps. De plus, tout processus cryptographique est plus ou moins sensible à des attaques visant à percer le secret de l'authentification pour détourner le EP 1 304 661 A1 représente l'art antérieur le plus proche.

<u>Résumé</u>

Il serait souhaitable qu'un transpondeur puisse authentifier un terminal avec lequel il doit communiquer avant qu'il ait à transmettre des données au terminal et que le terminal puisse également authentifier le transpondeur.

Il serait également souhaitable de disposer d'un processus d'authentification indépendant de toute cryptographie.

Il serait également souhaitable de disposer d'un processus d'authentification rapide et moins gourmand en énergie et en calcul.

Pour atteindre tout ou partie de ces objets ainsi que d'autres, il est prévu un transpondeur selon la revendication 1, ainsi qu'un procédé selon la revendication 2 et un procédé selon la revendication 5. De plus, il est prévu un procédé d'authentification d'un terminal produisant un champ magnétique, par un tel transpondeur comportant un circuit oscillant à partir duquel est produite une tension continue, dans lequel le transpondeur :

reçoit une première information relative au courant dans un circuit oscillant du terminal, mesuré par le terminal pour une première valeur de charge résistive du transpondeur ; et

exploite cette première information et des deuxièmes informations relatives au niveau de ladite tension continue, mesurée respectivement pour ladite première valeur de charge résistive et pour une seconde valeur de charge résistive.

Selon un mode de réalisation de la présente invention, le transpondeur :

évalue, à partir desdites informations, un rapport entre des valeurs du courant dans le circuit oscillant du terminal ; et compare ce rapport à ladite première information.

Selon un mode de réalisation de la présente invention, le transpondeur :

évalue, à partir desdites informations, une valeur de ladite tension ; et
compare cette valeur évaluée à la valeur mesurée.

Selon un mode de réalisation de la présente invention, la première information correspond au rapport entre le courant dans le circuit oscillant du terminal alors qu'aucun transpondeur n'est présent dans son champ sur une valeur de ce courant avec la première valeur de charge résistive du transpondeur.

Selon un mode de réalisation de la présente invention, en l'absence d'authentification, le transpondeur envoie des informations volontairement erronées.

On prévoit également un procédé d'authentification d'un terminal produisant un champ magnétique et d'un transpondeur selon la revendication 1 qui se trouve dans ce champ, dans lequel :

le terminal est authentifié par le transpondeur ; et
pour authentifier le transpondeur, le terminal :

reçoit une troisième information relative au courant dans le circuit oscillant du terminal, évaluée pour une deuxième valeur de charge résistive du transpondeur ; et
compare cette troisième information à une quatrième information correspondante obtenue par mesure.

Selon un mode de réalisation de la présente invention, les troisième et quatrième informations sont des rapports du courant dans le circuit oscillant du terminal alors qu'aucun transpondeur ne se trouve dans son champ et de ce même courant avec la deuxième valeur de charge résistive.

Selon un mode de réalisation de la présente invention, en l'absence d'authentification par le terminal, celui-ci envoie des informations volontairement erronées.

On prévoit également un transpondeur électromagnétique selon la revendication comportant :

un circuit oscillant en amont d'un circuit de redressement propre à fournir une tension continue lorsque le transpondeur se trouve dans le champ magnétique d'un terminal ; et
au moins une unité de traitement adaptée à mettre en oeuvre le procédé d'authentification.

On prévoit également un terminal apte à générer un champ électromagnétique à destination d'un transpondeur, comportant des moyens adaptés à mettre en oeuvre le procédé d'authentification.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1 est une représentation très schématique d'un système à transpondeur du type auquel s'applique à titre d'exemple la présente invention ;
la figure 2 est un schéma bloc simplifié d'un terminal et d'un transpondeur d'un système de communication à transpondeur électromagnétique ;
la figure 3 est un schéma bloc fonctionnel illustrant un mode de mise en oeuvre du procédé d'authentification d'un terminal par un transpondeur ;
la figure 4 illustre une variante du mode de mise en oeuvre de la figure 3 ; et
la figure 5 est un schéma bloc d'un mode de réalisation d'un transpondeur adapté à authentifier un terminal.

Description détaillée

De mêmes éléments ont été désignés par de mêmes références aux différentes figures. Par souci de clarté, seuls les étapes et éléments utiles à la compréhension de l'invention ont été représentés et seront décrits. En particulier, le codage et la modulation des communications entre le transpondeur et le terminal n'ont pas été détaillés, l'invention étant compatible avec toute communication usuelle. De plus, les fonctions susceptibles d'être mises en oeuvre par un terminal ou par un transpondeur, autres que l'authentification par ce transpondeur n'ont pas non plus été détaillées, l'invention étant, là encore, compatible avec toute fonction usuelle d'un terminal ou d'un transpondeur.

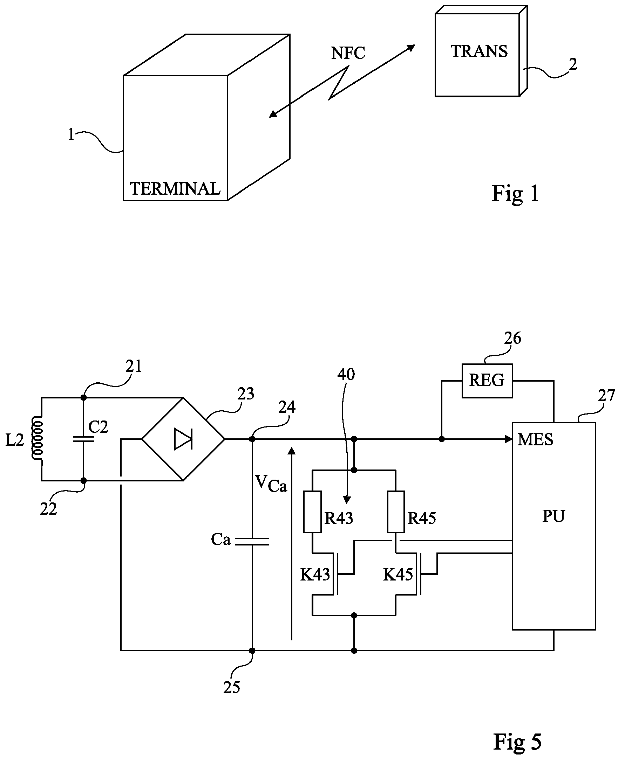

La figure 1 est un schéma bloc d'un système de communication à transpondeur électromagnétique. Un terminal 1 (TERMINAL) est susceptible de communiquer en champ proche (par exemple selon un protocole NFC - Near Field Communication) avec un élément distant, à savoir un transpondeur (TRANS).

Le terminal peut prendre différentes formes, par exemple, une borne de validation de titres de transport, un lecteur de passeports électroniques, un ordinateur portable, un dispositif mobile de communication (téléphone GSM, assistant numérique personnel - PDA, etc.), un boîtier électronique de démarrage d'un véhicule automobile, etc.

Le transpondeur peut de même prendre différentes formes, par exemple, une carte à puce, un titre de transport électronique, un passeport électronique, un terminal de télécommunication (téléphone GSM, PDA, etc.), une étiquette électronique, etc.

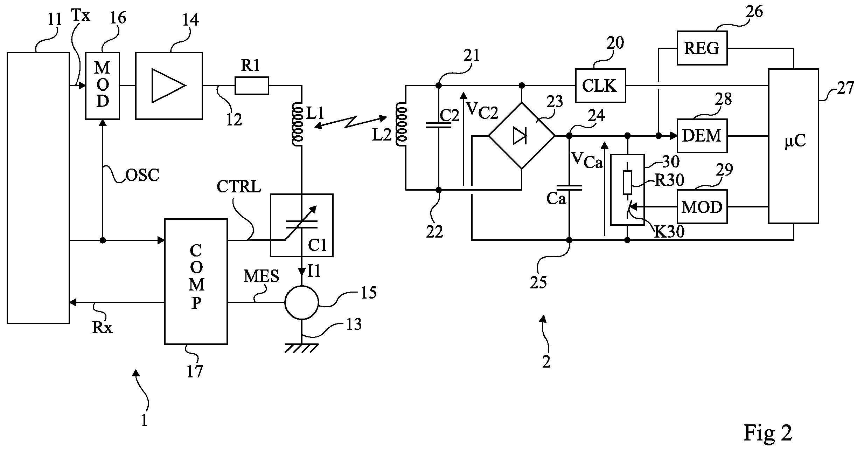

La figure 2 représente, de façon très schématique et simplifiée, un exemple de terminal 1 et de transpondeur 2.

Le terminal 1 comporte un circuit oscillant, généralement série, formé d'une inductance L1 en série avec un condensateur C1 et une résistance R1. Ce circuit oscillant série est, dans l'exemple de la figure 2, connecté entre une borne 12 de sortie d'un amplificateur ou coupleur d'antenne 14 et une borne 13 à un potentiel de référence (généralement la masse). Un élément 15 de mesure du courant dans le circuit oscillant est intercalé, par exemple, entre l'élément capacitif C1 et la masse 13. Cet élément de mesure 15 fait partie d'une boucle de régulation de phase qui sera décrite plus loin. L'amplificateur 14 reçoit un signal de transmission haute fréquence issu d'un modulateur 16 (MOD) qui reçoit une fréquence de référence (signal OSC) par exemple d'un oscillateur à quartz (non représenté). Le modulateur 16 reçoit si besoin un signal Tx provenant d'un circuit 11 de commande et d'exploitation des transmissions. Ce circuit 11 est généralement pourvu d'un microprocesseur de traitement de commandes et des données, communiquant avec différents circuits d'entrée/sortie (clavier, écran, élément d'échange avec un serveur, etc.) et/ou de traitement non détaillés. Les éléments du terminal 1 tirent le plus souvent l'énergie nécessaire à leur fonctionnement d'un circuit d'alimentation (non représenté) raccordé, par exemple, au réseau de distribution électrique (secteur) ou à une batterie (par exemple, celle d'un véhicule automobile ou d'un téléphone ou ordinateur portable). Le modulateur 16 fournit une porteuse haute fréquence (par exemple, à 13,56 MHZ) au circuit oscillant série L1-C1 qui engendre un champ magnétique.

L'élément capacitif C1 est, par exemple, un élément à capacité variable et commandable par un signal CTRL. Cet élément participe à la régulation de phase du courant I1 dans l'antenne L1 par rapport à un signal de référence. Cette régulation est une régulation du signal haute fréquence, c'est-à-dire du signal de la porteuse correspondant au signal fourni à l'amplificateur 14 en l'absence de données Tx à transmettre. La régulation est effectuée en faisant varier la capacité C1 du circuit oscillant du terminal de façon à maintenir le courant dans l'antenne en relation de phase constante avec un signal de référence. Ce signal de référence correspond, par exemple, au signal OSC fourni au modulateur 14. Le signal CTRL est issu d'un circuit 17 (COMP) dont le rôle est de détecter l'écart de phase par rapport au signal de référence et de modifier en conséquence la capacité de l'élément C1. Le comparateur reçoit une information MES sur le courant I1 dans le circuit oscillant détecté par l'élément de mesure 15 (par exemple, un transformateur d'intensité ou une résistance).

Un transpondeur 2, apte à coopérer avec le terminal 1, comporte un circuit oscillant, par exemple parallèle, formé d'une inductance L2 en parallèle avec un condensateur C2 entre deux bornes 21 et 22. Le circuit oscillant parallèle (appelé circuit résonant en réception) est destiné à capter le champ magnétique engendré par le circuit oscillant L1-C1 du terminal 1. Les circuits L2-C2 et L1-C1 sont accordés sur une même fréquence de résonance (par exemple 13,56 MHz). Les bornes 21 et 22 sont reliées à deux bornes d'entrée alternatives d'un pont redresseur 23 (le plus souvent double alternance). Les bornes de sortie redressée du pont 23 définissent respectivement une borne positive 24 et une borne de référence 25. Un condensateur Ca est connecté entre les bornes 24 et 25 de façon à lisser la tension redressée. Le cas échéant, l'énergie récupérée sert à recharger une batterie non représentée.

Quand le transpondeur 2 se trouve dans le champ du terminal 1, une tension haute fréquence est engendrée aux bornes du circuit résonant L2-C2. Cette tension, redressée par le pont 23 et lissée par le condensateur Ca, fournit une tension d'alimentation à des circuits électroniques du transpondeur par l'intermédiaire d'un régulateur de tension 26 (REG). Ces circuits comprennent généralement une unité de traitement 27 (par exemple un microcontrôleur $\mu$C) associée à une mémoire (non représentée), un démodulateur 28 (DEM) des signaux éventuellement reçus du terminal 1, et un modulateur 29 (MOD) pour transmettre des informations au terminal. Le transpondeur est généralement synchronisé au moyen d'une horloge (CLK) extraite, par un bloc 20, du signal haute fréquence récupéré, avant redressement, sur une des bornes 21 ou 22. Le plus souvent, tous les circuits électroniques du transpondeur 2 sont intégrés dans une même puce.

Pour transmettre des données du terminal 1 vers le transpondeur, le circuit 16 module (généralement en amplitude) la porteuse (signal OSC) en fonction du signal Tx. Côté transpondeur 2, ces données sont démodulées par le démodulateur 28 à partir de la tension $V_{Ca}$. Le cas échéant, le démodulateur prélève le signal à démoduler en amont du pont de redressement.

Pour transmettre des données du transpondeur 2 vers le terminal 1, le modulateur 29 commande un étage de modulation 30 (rétromodulation) de la charge constituée par les circuits du transpondeur sur le champ magnétique produit par le terminal. Cet étage est généralement constitué d'un interrupteur électronique K30 (par exemple, un transistor) et d'une résistance R30 (ou d'une capacité), en série entre les bornes 24 et 25. L'interrupteur K30 est commandé à une fréquence (par exemple, 847,5 kHz) dite de sous-porteuse, nettement inférieure (généralement avec un rapport d'au moins 10) à la fréquence du signal d'excitation du circuit oscillant du terminal 1. Lorsque l'interrupteur K30 est fermé, le circuit oscillant du transpondeur est soumis à un amortissement supplémentaire par rapport à la charge constituée par les circuits 20, 26, 27, 28, et 29 de sorte que le transpondeur prélève une quantité d'énergie plus importante du champ magnétique haute fréquence. Côté terminal 1, l'amplificateur 14 maintient constante l'amplitude du signal d'excitation haute fréquence. Par conséquent, la variation d'énergie du transpondeur se traduit par une variation d'amplitude et de phase du courant dans l'antenne L1. Cette variation est détectée par un démodulateur d'amplitude ou de phase du terminal. Dans le mode de réalisation illustré en figure 2, le comparateur 17 intègre un démodulateur de phase servant également à démoduler le signal provenant du transpondeur. Par conséquent, ce comparateur 17 fournit un signal Rx restituant une rétromodulation éventuelle de données reçues d'un transpondeur au circuit 11. D'autres circuits de démodulation peuvent être prévus, par exemple un circuit exploitant une mesure de la tension aux bornes du condensateur C1.

De nombreuses variantes existent pour coder/décoder et moduler/démoduler les communications entre un transpondeur et un terminal.

Le temps de réponse de la boucle de régulation de phase est suffisamment long pour ne pas gêner la rétromodulation éventuelle provenant d'un transpondeur, et suffisamment court devant la vitesse de passage d'un transpondeur dans le champ du terminal. On peut parler de régulation statique par rapport aux fréquences de modulation (par exemple, la fréquence de la porteuse de téléalimentation de 13,56 MHz et la fréquence de rétromodulation de 847,5 KHz utilisée pour transmettre des données du transpondeur vers la borne).

Un exemple de terminal à régulation de phase est décrit dans le document EP-A-0 857 981.

Le fait que la phase soit régulée côté terminal permet d'exploiter des mesures de courant et de tension dans le circuit oscillant du transpondeur pour en déduire des informations relatives au couplage du transpondeur lorsqu'il est dans le champ du terminal. Le coefficient de couplage entre le circuit oscillant du terminal et celui du transpondeur dépend essentiellement de la distance séparant le transpondeur du terminal. Le coefficient de couplage, noté k, est toujours compris entre 0 et 1. Il peut être défini par la formule :

$$k = \frac{M}{\sqrt{L1 \cdot L2}} \,, \qquad\qquad (\text{formule 1})$$

dans laquelle M représente l'inductance mutuelle entre les inductances L1 et L2 des circuits oscillants du terminal et du transpondeur.

On définit un couplage optimum comme étant la position à laquelle la tension $V_{C2}$ aux bornes du circuit oscillant du transpondeur est maximale. Ce couplage optimum, noté $k_{opt}$, peut s'exprimer :

$$k_{opt} = \sqrt{\frac{L2}{L1} \cdot \frac{R1}{R2}} \,, \qquad\qquad (\text{formule 2})$$

où R2 représente la résistance équivalente à la charge (load) constituée par les éléments du transpondeur sur son propre circuit oscillant. En d'autres termes, la résistance R2 représente la résistance équivalente de tous les circuits (microprocesseur, moyen de rétromodulation, etc.) du transpondeur 2, ramenée en parallèle sur le condensateur C2 et l'inductance L2 (avant ou après le pont redresseur). On appellera "charge résistive" la conductance apportée par les circuits du transpondeur, donc leur consommation. Le niveau de cette charge est symbolisé par la résistance R2 en parallèle aux bornes du circuit oscillant. Dans la formule 2 ci-dessus, on a négligé la résistance série de l'inductance L1 (antenne du terminal). On peut également considérer que la valeur de cette résistance série est, par simplification, incluse dans la valeur de la résistance R1.

La formule 2 représente une signature du couple terminal-transpondeur. Pour un même transpondeur et des conditions de fonctionnement données (charge R2), le coefficient de couplage optimum varie en fonction du terminal qui conditionne les valeurs L1 et R1.

On prévoit de tirer profit de cette caractéristique pour permettre à un transpondeur d'authentifier le terminal à portée duquel il se trouve en vérifiant indirectement cette signature et, de façon similaire au terminal d'authentifier le transpondeur.

Pour authentifier le couple terminal-transpondeur, on exploite l'information de la tension $V_{C2}$ aux bornes de l'élément capacitif C2 de son circuit oscillant. Cette tension est donnée par la relation :

$$V_{C2} = \frac{I2}{\omega \cdot C_2} \text{ ,} \qquad\qquad \text{(formule 3)}$$

où I2 représente le courant dans le circuit oscillant du transpondeur, et où $\omega$ représente la pulsation du signal.

Le courant I2 est égal à :

$$I2 = \frac{M \cdot \omega \cdot I1}{Z2} \text{ ,} \qquad\qquad \text{(formule 4)}$$

où I1 représente le courant dans le circuit oscillant du terminal et où Z2 représente l'impédance du transpondeur.

L'impédance Z2 du transpondeur est donnée par la relation suivante :

$$Z2^2 = X2^2 + \left(\frac{L2}{R2.C2}\right)^2 \text{ ,} \qquad\qquad \text{(formule 5)}$$

où X2 représente la partie imaginaire de l'impédance du circuit oscillant ($X2 = \omega \cdot L2 - \frac{1}{\omega \cdot C2}$) et où R2 représente la résistance équivalente à la charge (load) constituée par les éléments du transpondeur sur son propre circuit oscillant. En d'autres termes, la résistance R2 représente la résistance équivalente de tous les circuits (microprocesseur, moyen de rétromodulation, etc.) du transpondeur 2, ramenée en parallèle sur le condensateur C2 et l'inductance L2 (avant ou après le pont redresseur). On appellera "charge résistive" la conductance apportée par les circuits du transpondeur, donc leur consommation. Le niveau de cette charge est symbolisé par la résistance R2 en parallèle aux bornes du circuit oscillant.

Par ailleurs, le courant I1 dans le circuit oscillant du terminal est donné par la relation :

$$I1 = \frac{Vg}{Z1_{app}} \text{ ,} \qquad\qquad \text{(formule 6)}$$

où Vg désigne une tension, dite de générateur, excitant le circuit oscillant du terminal, et où $Z1_{app}$ représente l'impédance apparente du circuit oscillant.

Le fait de réguler la phase du circuit oscillant du terminal permet que toutes les variations qui auraient tendance à modifier, de façon statique devant les fréquences de modulation, la partie imaginaire de la charge (load) constituée par le transpondeur, soient compensées par la boucle de régulation de phase. Ainsi, on s'assure qu'en fonctionnement statique la partie imaginaire de l'impédance $Z1_{app}$ est nulle. Par conséquent, cette impédance $Z1_{app}$ devient égale à la résistance apparente $R1_{app}$ (partie réelle de l'impédance) et peut s'exprimer sous la forme :

$$Z1_{app} = R1_{app} = R1 + \frac{k^2 \cdot \omega^2 \cdot L1 \cdot L2^2}{Z2^2 \cdot R2 \cdot C2} \text{ .} \qquad\qquad \text{(formule 7)}$$

Dans la formule 7 ci-dessus, on a négligé la résistance série de l'inductance L1 (antenne du terminal). On peut également considérer que la valeur de cette résistance série est, par simplification, incluse dans la valeur de la résistance R1.

Comme les circuits oscillants sont accordés, on peut considérer que la partie imaginaire X2 de l'impédance Z2 est, en première approximation, proche de zéro. Il en découle que la valeur de l'impédance Z2 peut s'écrire :

$$Z2 = \frac{L2}{R2 \cdot C2} \text{ .} \qquad\qquad \text{(formule 8)}$$

En reportant cette simplification dans les formules 4 et 7, et en reportant la formule 4 dans la formule 3, on obtient, pour la tension récupérée $V_{C2}$ aux bornes du circuit oscillant du transpondeur, la formule :

$$V_{C2} = k \cdot \sqrt{\frac{L1}{L2}} \cdot \frac{V_g}{\frac{R1}{R2} + k^2 \cdot \frac{L1}{L2}} \cdot \qquad \text{(formule 9)}$$

Il ressort de la formule 9 que, pour un terminal donné (valeurs de Vg, R1 et L1 fixes) et pour une inductance L2 fixe (donc une valeur de C2 fixe), la tension $V_{C2}$ ne dépend que du couplage k et de la charge résistive (équivalente à la résistance R2) constituée par les circuits du transpondeur et ramenés en parallèle sur le circuit oscillant.

On notera que la formule 9 n'est applicable qu'en considérant le circuit oscillant du transpondeur L2-C2 réglé à la fréquence d'accord, c'est-à-dire que $\omega \cdot \sqrt{L2 \cdot C2} = 1$.

Pour une valeur de couplage k donnée, en considérant que l'impédance du circuit oscillant du terminal ne varie pas et que les circuits restent accordés, le rapport entre les valeurs $V_{C2]R21}$ et $V_{C2]R20}$ de la tension $V_{C2}$, respectivement pour les valeurs R21 et R20 de la résistance R2, donne d'après les formules 2 et 9 la relation suivante :

$$\frac{V_{C2]R21}}{V_{C2]R20}} = \frac{\left(\frac{k}{k_{opt]R20}}\right)^2 + 1}{\left(\frac{k}{k_{opt]R20}}\right)^2 + \frac{R20}{R21}} \cdot \qquad \text{(formule 10)}$$

Il ressort de la formule 10 qu'en augmentant la valeur de la résistance R2 d'une première valeur R20 vers une deuxième valeur R21 supérieure (ce qui revient à diminuer la charge des circuits du transpondeur sur le circuit oscillant L2-C2), la tension $V_{C2]R21}$ sera supérieure à la tension $V_{C2]R20}$. A l'inverse, une diminution de la valeur de la résistance R2 entraine une diminution de la tension $V_{C2}$ récupérée.

Une autre condition de fonctionnement caractéristique du couple terminal-transpondeur est liée à un fonctionnement à vide du terminal.

Les formules 6 et 7 permettent d'écrire :

$$I1 = \frac{V_g}{R1 + k^2 \cdot \frac{L1}{L2} \cdot R2} \cdot \qquad \text{(formule 11)}$$

Les valeurs à vide représentent le courant et la tension côté terminal quand aucun transpondeur n'est présent dans le champ du terminal. Dans ce fonctionnement à vide, l'impédance apparente du circuit oscillant du terminal ne dépend plus que de ses composants R1, C1 et L1. De plus, grâce à la régulation de phase, la partie imaginaire de cette impédance est toujours nulle. La formule 11 devient :

$$I1_{vide} = \frac{V_g}{R1} \cdot \qquad \text{(formule 12)}$$

Les formules 11 et 12 permettent d'écrire que, pour un même couplage courant k :

$$k^2 = \frac{R1}{R2} \cdot \frac{L2}{L1} \cdot \left(\frac{I1_{vide}}{I1} - 1\right) \cdot \qquad \text{(formule 13)}$$

La combinaison des formules 12 et 13 donne :

$$\left(\frac{k}{k_{opt}}\right)^2 = \frac{I1_{vide}}{I1} - 1 \; . \qquad\qquad \text{(formule 14)}$$

L'information des rapports des courants donne donc une information sur le coefficient de couplage optimum, donc sur la signature du système pour une charge donnée.

Par ailleurs, lorsqu'un transpondeur est dans le champ du terminal avec une charge résistive donnée (par exemple équivalente à une résistance R2 de valeur R20), le terminal peut mesurer la valeur du courant $I1_{]R20}$ dans son circuit oscillant L1-C1.

En exprimant le rapport des tensions récupérées avec deux valeurs R20 et R21 de résistance R2, pour un couplage k donné, et en combinant les formules 10 et 14, on obtient :

$$\frac{V_{C2]R21}}{V_{C2]R20}} = \frac{\dfrac{I1_{vide}}{I1_{]R20}}}{\dfrac{R20}{R21} + \left(\dfrac{I_{vide}}{I1_{]R20}} - 1\right)} \; . \qquad\qquad \text{(formule 15)}$$

Cette relation peut également s'écrire, pour R20<R21 :

$$\frac{I1_{vide}}{I1_{]R20}} = \frac{1 - \dfrac{R20}{R21}}{1 - \dfrac{V_{C2]R20}}{V_{C2]R21}}} \; , \qquad\qquad \text{(formule 16)}$$

ou pour R20>R21 :

$$\frac{I1_{vide}}{I1_{]R20}} = \frac{\dfrac{R20}{R21} - 1}{\dfrac{V_{C2]R20}}{V_{C2]R21}} - 1} \; . \qquad\qquad \text{(formule 16')}$$

En exprimant le rapport R21/R20 à partir de la formule 16, on obtient :

$$\frac{R20}{R21} = \frac{\dfrac{I1_{vide}}{I1_{]R21}} - 1}{\dfrac{I1_{vide}}{I1_{]R20}} - 1} \; , \qquad\qquad \text{(formule 17)}$$

que la valeur R20 soit inférieure ou supérieure à la valeur R21.

La relation 17 peut également s'exprimer :

$$\frac{Il_{vide}}{Il_{]R21}} = \frac{R21}{R20} \cdot \left( \frac{Il_{vide}}{Il_{]R20}} - 1 \right) + 1 \; . \qquad \text{(formule 18)}$$

On prévoit d'utiliser ces rapports entre les courants à vide et sous une charge résistive donnée (équivalente à une résistance R2 de valeur R20 ou R21) pour authentifier le transpondeur par le terminal et le terminal par le transpondeur.

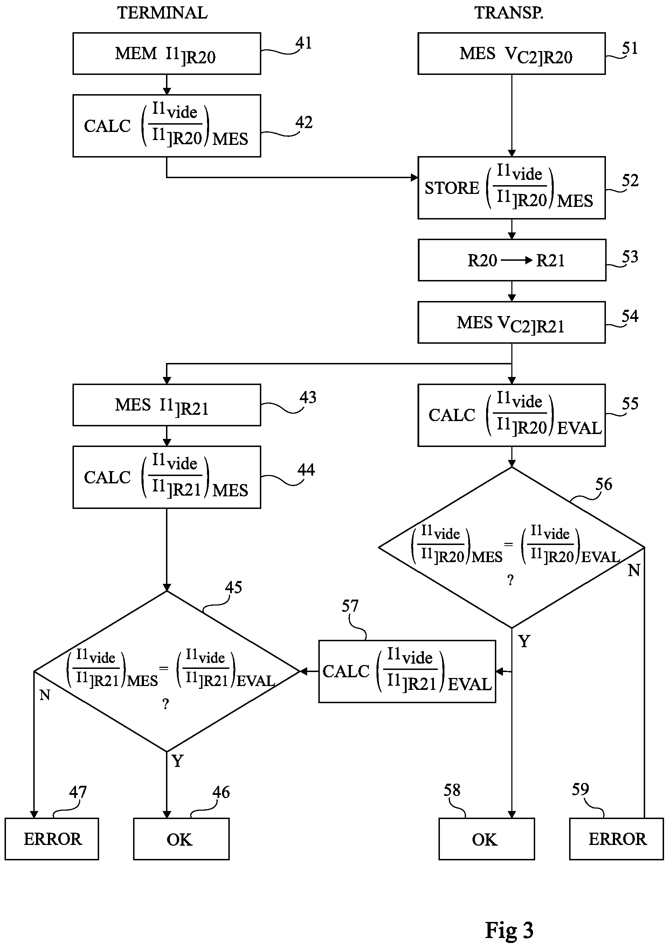

La figure 3 est un schéma-bloc fonctionnel d'un mode de réalisation d'une procédure d'authentification mutuelle d'un terminal et d'un transpondeur.

On suppose que le courant à vide dans le circuit oscillant du terminal a été préalablement mémorisé et enregistré. De préférence, cette détermination du courant à vide est effectuée alors que le terminal est dans son environnement fonctionnel pour tenir compte d'éventuelles perturbations statiques susceptibles d'influencer la mesure. Selon une variante préférée, la valeur du courant à vide est mise à jour périodiquement (par exemple, elle est programmée pour être effectuée dans des périodes d'inactivité du système où l'on sait qu'aucun transpondeur n'est présent).

Lorsque le terminal détecte un transpondeur dans le champ, il mesure (bloc 41, MES $I1_{]R20}$) le courant I1 dans son circuit oscillant (par exemple à l'aide de l'élément 15), puis calcule (bloc 42, CALC $(I1_{vide}/I1_{]R20})_{MES}$) le rapport entre la valeur mesurée et le courant à vide. Le résultat est transmis au transpondeur qui le mémorise (bloc 52, STORE $(I1_{vide}/I1_{]R20})_{MES}$).

Le transpondeur mesure et mémorise (bloc 51, MES $V_{C2]R20}$), avant ou après avoir reçu du terminal l'information relative au courant, la tension $V_{C2}$ aux bornes du condensateur C2 avec une première valeur R20 de résistance R2.

Puis (bloc 53, R20->R21), il modifie sa charge résistive de telle sorte que la résistance équivalente R2 prenne une valeur R21. La valeur R21 est par exemple choisie supérieure à la valeur R20. Le transpondeur effectue alors la mesure (bloc 54, MES $V_{C2]}R_{21}$) de la tension $V_{C2}$ avec cette valeur R21 et mémorise le résultat.

Le transpondeur calcule alors (bloc 55, CALC $(I1_{vide}/I1_{]R20})_{EVAL}$) une valeur attendue du rapport entre les valeurs du courants I1 du terminal à vide et avec la résistance R20, et compare (bloc 56, $(I1_{vide}/I1_{]R20})_{MES} = (I1_{vide}/I1_{]R20})_{EVAL}$ ?) la valeur évaluée à la valeur mesurée reçue du terminal.

En cas de divergence (sortie N du bloc 56), cela signifie que le circuit oscillant du terminal ne respecte pas la signature.

Si le test 56 confirme des valeurs identiques, le transpondeur considère le terminal comme authentique (bloc 58, OK). Sinon (sortie N du bloc 56), il entame un traitement d'erreur (bloc 59, ERROR). Ce traitement correspond, par exemple, à un refus de transaction, à une réinitialisation du transpondeur, à un fonctionnement dans un mode dégradé (sans réalisation de fonctions sensibles sur le plan des informations manipulées), etc. On peut également prévoir que le transpondeur envoie des messages pour tromper ou désorienter le terminal avec des informations volontairement erronées, par exemple des messages incluant des données aléatoires. Divers autres traitements peuvent être envisagés, par exemple, tout traitement d'erreur habituellement prévu en l'absence d'authentification par un mécanisme de chiffrement.

Si le terminal est considéré comme authentique, le transpondeur calcule et transmet au terminal (bloc 57, CALC $(I1_{vide}/I1_{]R21})_{EVAL}$) une valeur évaluée du rapport entre les courants I1 à vide et avec la valeur R21.

Parallèlement (n'importe quand après l'étape 53), le transpondeur envoie au terminal une information comme quoi il a commuté sa charge résistive vers une autre valeur de façon à provoquer une nouvelle mesure du courant I1.

Le terminal (bloc 43, MES $I1_{]R21}$) mesure le courant I1, puis calcule (bloc 44, CALC $(I1_{vide}/I1_{]R21})_{MES}$) le rapport du courant I1 à vide sur ce courant $I1_{]R21}$ et stocke le résultat.

Le terminal vérifie alors (bloc 45, $(I1_{vide}/I1_{]R21})_{MES} = (I1_{vide}/I1_{]R21})_{EVAL}$ ?) la valeur mesurée par lui par rapport à la valeur évaluée par le transpondeur. En cas d'identité (sortie Y du bloc 45), le terminal considère le transpondeur comme authentique (bloc 46, OK). Sinon, il entame un traitement d'erreur (bloc 47, ERROR). Comme pour le transpondeur, différents traitements d'erreur peuvent être envisagés selon l'application (par exemple, un blocage, l'envoi d'informations volontairement erronées, etc.).

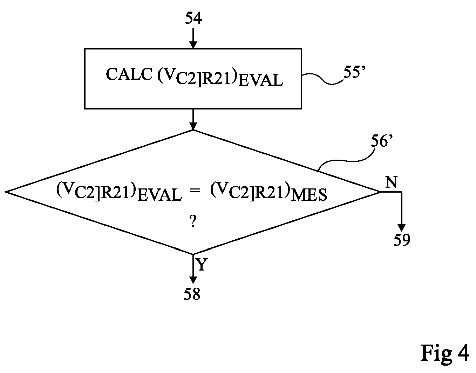

La figure 4 illustre partiellement une variante de la figure 3 dans laquelle le calcul 55 et le test 56 sont remplacés par une évaluation (bloc 55', CALC $(V_{C2] R21})_{EVAL}$) de la tension $V_{C2}$ avec la valeur R21 de résistance R2, et une comparaison (bloc 56', $(V_{C2] R21})_{EVAL} = (V_{C2]R21})$ MES ?) de cette valeur évaluée par rapport à la valeur mesurée à l'étape 54. Le reste est identique au mode de réalisation de la figure 3. La variante de la figure 4 peut être combinée au mode de réalisation de la figure 3.

Par conséquent, pour un terminal donné (valeurs de Vg et R1 fixes) et un système à l'accord, on peut authentifier le couple transpondeur-terminal en exploitant les tensions obtenues côté transpondeur avec deux charges résistives (équivalentes aux résistances R20 et R21) et les courants correspondants dans le circuit oscillant du terminal.

En pratique, on ne mesure pas directement la tension $V_{C2}$ aux bornes du circuit oscillant du transpondeur, mais la tension lissée aux bornes du condensateur $V_{Ca}$ en sortie du pont redresseur 23. Cette tension $V_{Ca}$ est proportionnelle à la tension $V_{C2}$. Comme on évalue des rapports de tension, il n'est pas nécessaire de connaître le coefficient de proportionnalité entre les tensions $V_{C2}$ et $V_{Ca}$. Dans un exemple de réalisation particulier, la mesure est effectuée par le microprocesseur. La mémorisation des valeurs des tensions mesurées s'effectue, soit de façon analogique, mais préférentiellement de façon numérique sur plusieurs bits dont le nombre dépend de la précision d'analyse souhaitée.

Les tests pourront être effectués dans un ordre différent de celui indiqué ci-dessus. Toutefois, ils sont préférentiellement effectués dans un ordre croissant de complexité des calculs, ce qui permet de rejeter plus rapidement un terminal non adapté au transpondeur.

De plus, différentes valeurs intermédiaires peuvent être mémorisées pour être réutilisées dans les tests successifs ou à l'inverse calculées à chaque fois (à la volée).

On pourra tenir compte d'une valeur minimale pour diminuer la valeur de la résistance R2, cette valeur correspondant à la valeur minimale acceptable pour préserver une tension d'alimentation suffisante aux circuits du transpondeur. Cette valeur est obtenue en considérant le rapport R20/R2min d'après la formule 16'. En notant $U_{C2min}$ la tension avec la résistance R2min, cette formule devient :

$$\frac{Il_{vide}}{Il_{]R20}} = \frac{\dfrac{R20}{R2\min} - 1}{\dfrac{V_{C2]R20}}{V_{C2\min}} - 1} . \qquad \text{(formule 19)}$$

Des tolérances ou plages de valeurs acceptables peuvent être introduites dans les tests pour tenir compte d'éventuelles dérives de fonctionnement du terminal ou, dans le cas d'une famille de terminaux autorisés, des éventuelles dispersions acceptables parmi les terminaux de cette famille.

Il est donc possible, à partir de deux mesures de tension avec deux valeurs de résistance du circuit oscillant du transpondeur, d'effectuer une authentification du terminal.

Par ailleurs, le terminal peut authentifier le transpondeur à partir de deux mesures du courant dans son circuit oscillant avec ces deux valeurs de résistance.

Ces authentifications peuvent être exploitées par le terminal, par le transpondeur ou par les deux.

La figure 5 est un schéma-blocs d'un mode de réalisation d'un transpondeur 2, équipé pour déterminer automatiquement, lorsqu'il est dans le champ d'un terminal (non représenté), si ce terminal est autorisé. La représentation de la figure 5 est simplifiée par rapport à celle de la figure 2. En particulier, les éléments de démodulation, de rétromodulation et d'obtention de la fréquence d'horloge n'ont pas été illustrés.

Comme précédemment, le transpondeur 2 est basé sur un circuit oscillant parallèle L2-C2 dont les bornes 21 et 22 sont reliées aux bornes d'entrée d'un pont de redressement 23. En sortie du régulateur 26 peut être prévu un élément de mesure du courant Ic à destination de l'unité de traitement. Par ailleurs, entre les bornes 24 et 25 du pont redresseur 23, est prévu un circuit résistif commutable 40. Selon une réalisation de l'invention revendiquée, le circuit résistif commutable 40 comporte deux résistances R43 et R45 connectées en parallèle en étant chacune en série avec un interrupteur K43, respectivement K45. Les interrupteurs K43 et K45 (par exemple, des transistors MOS) sont destinés à être commutés pour mettre en oeuvre le procédé de détermination de la position de couplage. L'unité de traitement 27 (PU) reçoit une information sur la tension $V_{Ca}$ sur une entrée MES pour mettre en oeuvre le procédé décrit ci-dessus. Dans l'exemple de la figure 5, lorsque les deux résistances R43 et R45 sont fonctionnellement connectées, la résistance R2 (charge des circuits du transpondeur) représente la valeur R20. La déconnexion d'une des résistances (par exemple, la résistance R43) augmente la résistance R2 vers la valeur R21. D'autres connexions et commutations peuvent être prévues selon le mode de réalisation du procédé mis en oeuvre. Selon une autre réalisation, une seule résistance commutable peut être utilisée en considérant qu'une des deux valeurs de la résistance R2 correspond à la charge résistive des autres circuits du transpondeur.

Selon un mode de réalisation préféré, la résistance commutable correspond à celle utilisée pour une rétromodulation résistive. Par exemple, on effectue une première mesure en commutant la résistance de rétromodulation pour qu'elle soit fonctionnellement dans le circuit (interrupteur K30 à l'état passant dans l'exemple de la figure 2). On mesure la tension $V_{C2]R20}$. Puis, on ouvre l'interrupteur K30 et on mesure la tension $V_{C2]R21}$.

En variante, l'augmentation ou la diminution de la résistance équivalente R2 est provoquée par une variation de la consommation des circuits du transpondeur, typiquement de l'unité de traitement 27. Par exemple, pour diminuer la valeur de la résistance R2 (augmenter la consommation), on déclenche l'exécution de calculs ou de traitements par l'unité 27. On peut également provoquer une augmentation de la résistance équivalente R2 en réduisant la consommation de l'unité 27 en interrompant certains calculs. En variante, on ralentit la vitesse d'exécution conditionnée par l'horloge (bloc 20). La variation de la résistance R2 est connue à partir du moment où la consommation de différentes tâches à exécuter par l'unité 27 est connue.

Les calculs requis pour authentifier un terminal sont suffisamment simples pour que leur temps d'exécution soit négligeable par rapport à la vitesse de déplacement d'un transpondeur devant un terminal (donc la vitesse de variation du coefficient de couplage). C'est en particulier le cas pour des transpondeurs équipés de microcontrôleurs exécutant des fonctions de cryptographie dans lesquels ces fonctions gourmandes en calculs sont elles-mêmes exécutées dans une durée durant laquelle on peut considérer que le couplage ne varie pas. Dans d'autres cas, le transpondeur reste posé sur une surface de réception du terminal et le couplage ne varie donc pas pendant un période encore plus grande.

On notera que si un élément pirate cherche à intercepter les valeurs échangées lors de l'authentification, sa simple présence dans le champ modifie les impédances vues par le terminal et/ou le transpondeur et fait échouer l'authentification.

On notera que l'authentification est effectuée par des calculs et mesures simples.

Divers modes de réalisation avec diverses variantes ont été décrits ci-dessus. On notera que l'homme de l'art pourra combiner divers éléments de ces divers modes de réalisation et variantes sans faire preuve d'activité inventive. En particulier, le choix et l'ordre des tests à effectuer dépend de l'application, par exemple du temps disponible pour réaliser l'authentification, de la capacité de calcul du transpondeur, etc.

**Revendications**

1. Transpondeur électromagnétique comportant :

   un circuit oscillant ;
   des moyens pour recevoir, d'un terminal (1) produisant un champ électromagnétique, un premier rapport $((I1_{vide}/I1_{R20})_{MES})$ entre une première information représentative de la valeur du courant dans un circuit oscillant du terminal à vide ($I1_{vide}$) et une deuxième information représentative dudit courant ($I1_{R20}$) pour une première valeur (R20) de charge résistive constituée par le transpondeur ;
   des moyens pour mesurer une tension représentative de la tension ($V_{C2}$) aux bornes dudit circuit oscillant avec une première valeur (R20) de charge résistive (R2) ;
   des moyens pour modifier la charge résistive vers une deuxième valeur (R21) ;
   des moyens pour mesurer ladite tension avec la deuxième valeur (R21) et pour mémoriser le résultat ;
   au moins une des deux fonctionnalités suivantes :

      la première fonctionnalité comportant des moyens pour calculer une premier rapport attendu $((I1_{vide}/I1_{R20})_{EVAL})$ entre ladite première information et une deuxième information représentative dudit courant ($I1_{R20}$) pour ladite première valeur (R20) de charge résistive, et des moyens pour comparer ledit premier rapport attendu audit premier rapport reçu du terminal, le terminal étant authentifié s'ils sont identiques ;
      la deuxième fonctionnalité comportant des moyens pour évaluer (55') ($CALC(V_{C2]R21})_{EVAL})$ la valeur de ladite tension (VC2) avec la deuxième valeur (R21) de ladite charge résistive (R2) et des moyens pour comparer (56') cette valeur évaluée à la valeur mesurée avec la deuxième valeur (R21) de ladite tension, le terminal étant authentifié si ces valeurs sont identiques ;
      des moyens pour calculer un deuxième rapport attendu $((I1_{vide}/I1_{R21})_{EVAL})$ entre ladite première information et une troisième information représentative dudit courant ($I1_{R21}$) pour ladite deuxième valeur (R21) de charge résistive ; et
      des moyens pour transmettre ledit deuxième rapport attendu au terminal,
      dans lequel les moyens pour modifier la charge résistive sont formés d'un circuit résistif commutable (40), comportant deux résistances (R43 et R45) connectées en parallèle et étant chacune en série avec un interrupteur (K43), respectivement (K45), ou
      comportant une seule résistance commutable, ou
      sont des moyens avec lesquels la consommation des circuits du transpondeur peut être variée.

2. Procédé d'authentification d'un terminal (1) produisant un champ magnétique, par un transpondeur (2) selon la revendication 1.

3. Procédé selon la revendication 2, dans lequel le transpondeur
   reçoit une première information $((I1_{vide}/I1_{R20})_{MES})$ relative au courant (I1) dans un circuit oscillant (L1-C1) du terminal, mesuré par le terminal pour une première valeur (R20) de charge résistive du transpondeur ; et
   exploite (55, 56 ; 55', 56') cette première information et des deuxièmes informations ($V_{C2]R20}$, $V_{C2]R21}$) relatives au niveau de ladite tension continue, mesurée respectivement pour ladite première valeur de charge résistive et pour une seconde valeur (R21) de charge résistive.

4. Procédé selon la revendication 2 ou 3, dans lequel, en l'absence d'authentification, le transpondeur (2) envoie des informations volontairement erronées.

5. Procédé d'authentification d'un terminal (1) produisant un champ magnétique et d'un transpondeur (2) qui se trouve dans son champ, dans lequel :

le terminal est authentifié par le transpondeur selon l'une quelconque des revendications 2 à 4 ; et
pour authentifier le transpondeur, le terminal :

reçoit une troisième information ($(I1_{vide}/I1_{R21})_{EVAL}$) relative au courant dans le circuit oscillant du terminal, évaluée (57) pour une deuxième valeur (R21) de charge résistive (R2) du transpondeur ; et
compare (45) cette troisième information à une quatrième information correspondante ($(I1_{vide}/I1_{R21})_{MES}$) obtenue par mesure (41, 42).

6. Procédé selon la revendication 5, dans lequel les troisième et quatrième informations sont des rapports du courant ($I1_{vide}$) dans le circuit oscillant du terminal (1) alors qu'aucun transpondeur ne se trouve dans son champ et de ce même courant ($I1_{JR21}$) avec la deuxième valeur (R21) de charge résistive (R2).

7. Procédé selon la revendication 5 ou 6, dans lequel, en l'absence d'authentification par le terminal (1), celui-ci envoie des informations volontairement erronées.

**Patentansprüche**

1. Ein elektromagnetischer Transponder, der Folgendes aufweist:

eine oszillierende Schaltung;
Mittel zum Empfangen, von einem Endgerät (1), das ein elektromagnetisches Feld erzeugt, eines ersten Verhältnisses ($(I1_{off-load}/I1_{R20})_{MES}$) zwischen ersten Daten, die für einen Wert eines Stroms in einer oszillierenden Schaltung des Leerlauf- bzw. Off-Load-Endgeräts ($I1_{off-load}$) repräsentativ sind und zweiten Daten, die für den Strom ($I1_{R20}$) für einen ersten Wert (R20) einer resistiven Last, die durch den Transponder gebildet wird, repräsentativ sind;
Mittel zum Messen einer Spannung, die für die Spannung ($V_{C2}$) über die Anschlüsse der oszillierenden Schaltung mit einem ersten Wert (R20) der resistiven Last (R2) repräsentativ ist;
Mittel zum Modifizieren der resistiven Last auf einen zweiten Wert (R21);
Mittel zum Messen der Spannung mit dem zweiten Wert (R21) und zum Speichern der Ergebnisse;
wenigstens eine der zwei folgenden Funktionalitäten:

wobei die erste Funktionalität Mittel aufweist zum Berechnen eines erwarteten Verhältnisses ($(I1_{off-load}/I1_{R20})_{EVAL}$) zwischen den ersten Daten und zweiten Daten, die für den Strom ($I1_{R20}$) für den ersten Wert (R20) einer resistiven Last repräsentativ sind, und Mittel zum Vergleichen des ersten erwarteten Verhältnisses mit dem ersten Verhältnis, das von dem Endgerät empfangen wird, wobei das Endgerät authentifiziert wird, wenn die Verhältnisse identisch sind;
wobei die zweite Funktionalität Mittel aufweist zum Evaluieren (55') ($CALC(V_{C2]R21})_{EVAL}$) des Wertes der Spannung (VC2) mit dem zweiten Wert (R21) der resistiven Last (R2) und Mittel (56') zum Vergleichen des evaluierten Wertes des gemessenen Wertes mit dem zweiten Wert (R21) der Spannung, wobei das Endgerät authentifiziert wird, wenn die Werte identisch sind,
Mittel zum Berechnen eines zweiten erwarteten Verhältnisses ($(I1_{off-load}/IR_{21})_{EVAL}$) zwischen der ersten Daten und dritten Daten, die für den Strom ($I1_{21}$) für den zweiten Wert (R21) der resistiven Last repräsentativ sind; und
Mittel zum Senden des zweiten erwarteten Verhältnisses an das Endgerät, wobei die Mittel zum Modifizieren der resistiven Last aus einer schaltbaren, resistiven Schaltung (40) gebildet sind,
die zwei Widerstände (R43 und R45) aufweist, die parallel verbunden bzw. angeschlossen sind, und wobei jeder in Reihe mit einem Schalter (K43) bzw. (K45) ist; oder
die einen einzelnen, schaltbaren Widerstand aufweisen, oder

Mittel sind, mit denen der Verbrauch der Transponderschaltungen modifiziert werden kann.

**2.** Ein Verfahren zur Authentifizierung eines Endgeräts (1), das ein magnetisches Feld erzeugt, durch einen Transponder (2) gemäß Anspruch 1.

**3.** Verfahren nach Anspruch 2, wobei der Transponder
erste Daten $((I1_{off\text{-}load}/I1_{R20})_{MES})$ relativ zu dem Strom (I1) in einer oszillierenden Schaltung (L1-C1) des Endgeräts empfängt, gemessen durch das Endgerät für einen ersten Wert (R20) der resistiven Last des Transponders; und die ersten Daten und zweiten Daten $(V_{C2]R20}, V_{C2]R21})$ relativ zu dem Pegel der Gleichstromspannung, gemessen jeweils für den ersten resistiven Lastwert und für einen zweiten resistiven Lastwert (R21), verwendet (55, 56; 55', 56').

**4.** Verfahren nach Anspruch 2 oder 3, wobei der Transponder (2), in Abwesenheit einer Authentifizierung, absichtlich falsche Daten sendet.

**5.** Ein Verfahren zum Authentifizieren eines Endgeräts (1), das ein magnetisches Feld erzeugt und eines Transponders (2), der in dessen Feld vorliegt, wobei:

das Endgerät durch den Transponder gemäß einem der Ansprüche 2 bis 4 authentifiziert wird; und um den Transponder zu authentifizieren,
das Endgerät dritte Daten $((I1_{off\text{-}load}/I1_{R21})EVAL)$ relativ zu dem Strom in der oszillierenden Schaltung des Endgeräts empfängt, und zwar evaluiert (57) für einen zweiten Wert (R21) der resistiven Last (R2) des Transponders; und
das Endgerät (45) die dritten Daten mit vierten entsprechenden Daten $((I1_{off\text{-}load}/I1_{R21})_{MES})$ vergleicht, die durch Messung (41, 42) erhalten werden.

**6.** Verfahren nach Anspruch 5, wobei die dritten und vierten Daten Verhältnisse des Stroms $(I1_{off\text{-}load})$ in der oszillierenden Schaltung des Endgeräts (1) sind, während kein Transponder in dessen Feld vorliegt, zu demselben Strom $(I_{1]R21})$ mit dem zweiten Wert (R21) der resistiven Last (R2).

**7.** Verfahren nach Anspruch 5 oder 6, wobei, in Abwesenheit einer Authentifizierung durch das Endgerät (1), das Endgerät absichtlich falsche Daten sendet.

**Claims**

**1.** An electromagnetic transponder comprising:

an oscillating circuit;
means for receiving from a terminal (1) generating an electromagnetic field, a first ratio $((I1_{off\text{-}load}/I1_{R20})_{MES})$ between a first data representative of a value of a current in an oscillating circuit of the off-load terminal $(I1_{off\text{-}load})$ and a second data representative of said current $(I1_{R20})$ for a first value (R20) of resistive load constituted by the transponder;
means for measuring a voltage representative of the voltage $(V_{C2})$ across the terminals of said oscillating circuit with a first value (R20) of resistive load (R2);
means for modifying the resistive load to a second value (R21) ;
means for measuring said voltage with the second value (R21) and for storing the results;
at least one of the two following functionalities:

the first functionality comprising means for calculating a first expected ratio $((I1_{off\text{-}load}/I1_{R20})_{EVAL})$ between said first data and a second data representative of said current $(I1_{R20})$ for said first value (R20) of resistive load, and means for comparing said first expected ratio with said first ratio received from the terminal, the terminal being authenticated if said ratios are identical;
the second functionality comprising means for evaluating (55') $(CALC(V_{C2]R21})EVAL)$ the value of said voltage (VC2) with the second value (R21) of said resistive load (R2) and means (56') for comparing said evaluated value of the measured value with the second value (R21) of said voltage, the terminal being authenticated if said values are identical,
means for calculating a second expected ratio $((I1_{off\text{-}load}/I1_{R21})_{EVAL})$ between said first data and a third data representative of said current $(I1_{R21})$ for said second value (R21) of resistive load; and

means for transmitting said second expected ratio to the terminal,
wherein the means for modifying the resistive load are formed of a switchable resistive circuit (40),
comprising two resistors (R43 and R45), parallel connected, and each being in series with a switch (K43),
respectively (K45); or
comprising a single switchable resistor, or
are means with which the consumption of the transponder circuits can be modified.

2. A method of authentication of a terminal (1) generating a magnetic field, by a transponder (2) according to claim 1.

3. The method of claim 2, wherein the transponder receives first data ($(I1_{off-load}/I1_{R20})_{MES}$) relative to the current (I1) in an oscillating circuit (L1-C1) of the terminal, measured by the terminal for a first value (R20) of the resistive load of the transponder; and
uses (55, 56; 55', 56') said first data and second data ($V_{C2]R20}$, $V_{C2]R21}$) relative to the level of said D.C. voltage, respectively measured for said first resistive load value and for a second resistive load value (R21).

4. The method of claim 2 or 3, wherein, in the absence of an authentication, the transponder (2) sends intentionally incorrect data.

5. A method for authenticating a terminal (1) generating a magnetic field and a transponder (2) which is present in its field, wherein:

> the terminal is authenticated by the transponder according to any of claims 2 to 4; and
> to authenticate the transponder, the terminal:

>> receives third data ($(I1_{off-load}/I1_{R21})_{EVAL}$) relative to the current in the oscillating circuit of the terminal, evaluated (57) for a second value (R21) of resistive load (R2) of the transponder; and
>> compares (45) said third data with fourth corresponding data ($(I1_{off-load}/I1_{R21})_{MES}$) obtained by measurement (41, 42).

6. The method of claim 5, wherein the third and fourth data are ratios of the current ($I1_{off-load}$) in the oscillating circuit of the terminal (1) while no transponder is present in its field and of this same current ($I1_{]R21}$) with the second value (R21) of the resistive load (R2).

7. The method of claim 5 or 6, wherein, in the absence of an authentication by the terminal (1), said terminal sends intentionally incorrect data.

Fig 1

Fig 5

Fig 2

TERMINAL

TRANSP.

$$\text{MEM } I1_{]R20} \qquad 41$$

$$\text{MES } V_{C2]R20} \qquad 51$$

$$\text{CALC } \left(\frac{I1_{vide}}{I1_{]R20}}\right)_{MES} \qquad 42$$

$$\text{STORE } \left(\frac{I1_{vide}}{I1_{]R20}}\right)_{MES} \qquad 52$$

$$R20 \longrightarrow R21 \qquad 53$$

$$\text{MES } V_{C2]R21} \qquad 54$$

$$\text{MES } I1_{]R21} \qquad 43$$

$$\text{CALC } \left(\frac{I1_{vide}}{I1_{]R20}}\right)_{EVAL} \qquad 55$$

$$\text{CALC } \left(\frac{I1_{vide}}{I1_{]R21}}\right)_{MES} \qquad 44$$

$$56$$

$$\left(\frac{I1_{vide}}{I1_{]R20}}\right)_{MES} = \left(\frac{I1_{vide}}{I1_{]R20}}\right)_{EVAL} ? \qquad N$$

$$45$$

$$\left(\frac{I1_{vide}}{I1_{]R21}}\right)_{MES} = \left(\frac{I1_{vide}}{I1_{]R21}}\right)_{EVAL} ?$$

$$57 \quad \text{CALC } \left(\frac{I1_{vide}}{I1_{]R21}}\right)_{EVAL}$$

N

Y

Y

47 ERROR

46 OK

58 OK

59 ERROR

Fig 3

54

CALC $(V_{C2]R21})_{EVAL}$    55'

56'

$(V_{C2]R21})_{EVAL} = (V_{C2]R21})_{MES}$

?

N

59

Y

58

Fig 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1304661 A1
- EP 0857981 A